# EUROPEAN PATENT APPLICATION

(11) **EP 1 189 376 A2**
(43) Date of publication of application: **20.03.2002**
(21) Application number: 01122020.9
(22) Date of filing: 13.09.2001
(51) Int. Cl.: H04J 14/02

(54) **Wavelength division multiplex optical transmitter, wavelength division multiplex optical receiver, optical transmission device, and optical transmission system**

(30) Priority: 14.09.2000 JP 2000279848
(71) Applicant: MATSUSHITA ELECTRIC INDUSTRIAL CO., LTD., Kadoma-shi, Osaka 571-8501 (JP)
(72) Inventor: Iida, Masanori, Katano-shi, Osaka 576-0033 (JP); Adachi, Hisashi, Minoo-shi, Osaka 562-0001 (JP); Asakura, Hiroyuki, Tennoji-ku, Osaka-shi, Osaka 543-0013 (JP); Korenaga, Tsuguhiro, Katano-shi, Osaka 576-0021 (JP); Shimada, Mikihiro, Kadoma-shi, Osaka 571-0064 (JP)
(74) Representative: Grünecker, Kinkeldey, Stockmair & Schwanhäusser Anwaltssozietät

(57) **Abstract**

The optical transmission system according to the present invention includes a wavelength division multiplex optical transmitter having a band division portion 3 for dividing a frequency-multiplexed electrical signal into a plurality of frequency bands, semiconductor lasers 8 and 9 for converting the electrical signals of the plurality of frequency bands into a plurality of optical signals utilizing respective different wavelengths for each of the frequency bands, and an optical multiplex portion 12 for multiplexing each of the optical signals, and a wavelength division multiplex optical receiver having light-to-electricity conversion portion 34 and 35 for converting an optical signal from the wavelength division multiplex optical transmitter into an electrical signal, and respectively reconstructing the electrical signals of the plurality of frequency bands by dividing the converted electrical signal into a plurality of frequency bands.

## Description

### BACKGROUND OF THE INVENTION

### Field of the Invention

The invention relates to a wavelength division multiplex optical transmitter, a wavelength division multiplex optical receiver, an optical transmission device and an optical transmission system, which are used for optical communication, CATV, optical measurement, and mobile communication, for example.

### Related Art of the Invention

In recent years, for example, in the fields of the video monitor system, CATV, subscriber system, andmobile communication, the multichannel optical transmission of video and voice or data making use of the low loss and broad band characteristics of optical fibers is in actual use.

In such transmission, signals on multiple channels are electrically multiplexed into an AM signal with a plurality of sub-carriers each having a different frequency. Then, the AM signal is converted into an optical signal with direct modulation of a semiconductor laser and the like, and the optical signal is transmitted through an optical fiber.

The optical transmission of video under an AM signal requires that the receiver receives high optical input power to obtain a C/N value (carrier-to-noise ratio) for ensuring desired video quality, though the modulator and demodulator (MODEM) therefor is simple in the configuration and of low cost.

Further, in the mobile communication, the intensity level of voice and data signals to be transmitted is largely changed depending on the movement of the terminal, so that a wide dynamic range with respect to signal changes is necessary.

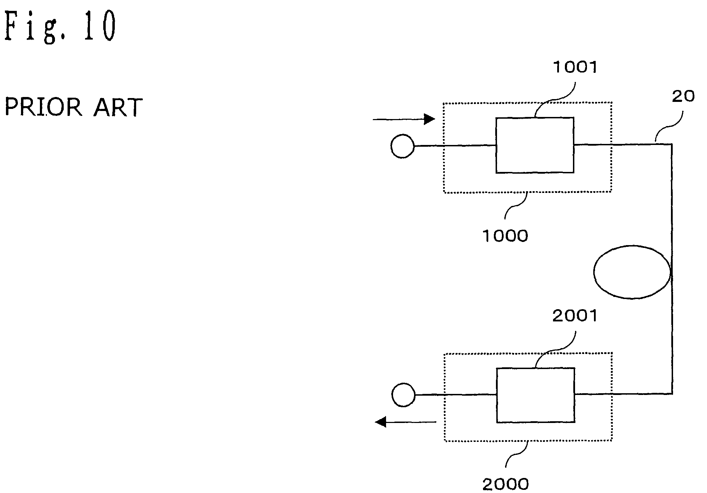

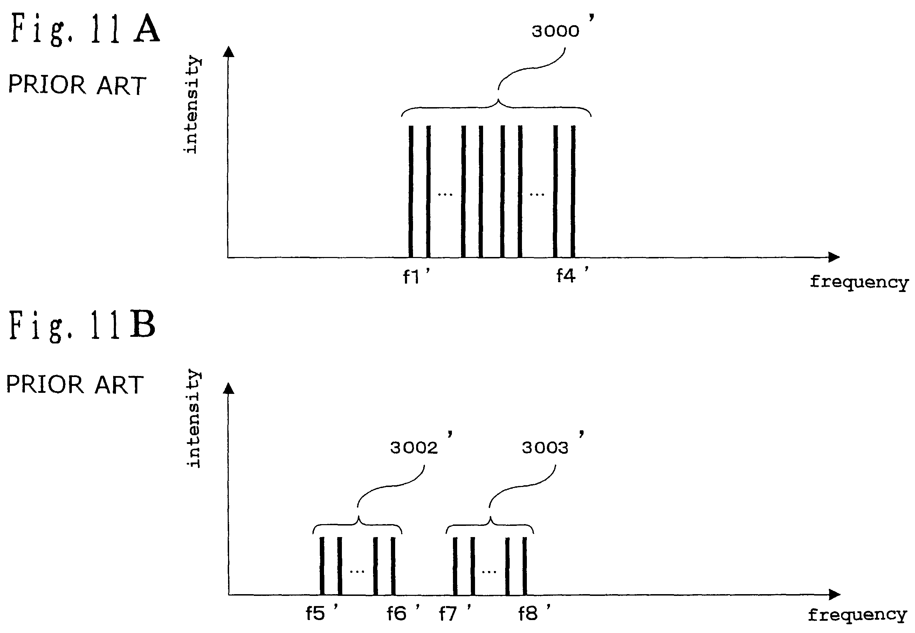

Referring now to Figures 10, 11A and 11B, the configuration and operation of a conventional optical-transmission system will be described.

Here, Figure 10 is a block diagram of a conventional optical-transmission system. Further, Figure 11A shows a frequency arrangement diagram of a conventional transmission signal, and Figure 11B shows a frequency arrangement diagram of nonlinear distortion signals generated therein.

A multi-channel signal group 3000' is frequency-multiplexed into a plurality of sub-carriers over the range of frequencies from f1' to f4' (see Figure 11A), and then converted into optical signals by an electricity-to-light conversion portion 1001 of an optical transmitter 1000. Then, the optical signals are propagated through an optical fiber 20 and input into a light-to-electricity conversion portion 2001 of an optical receiver 2000, in which the optical signals are converted into electrical signals, and the electrical signals are took out therefrom.

However, in such a conventional optical-transmission system, when electrical signals of multiple channels are converted into optical signals by the electricity-to-light conversion portion 1001, signal distortions are caused by the non-linearity of electricity-to-light conversion.

Particularly, when a large number of sub-carriers exist on the frequency axis, it becomes impossible to neglect the effect of the generation of intermodulation distortion such as second-order intermodulation distortion (IM2) 3002' and third-order intermodulation distortion (IM3) 3003' caused by each carrier component, as shown in Figure 11B.

If such intermodulation distortion exists within the signal band, these distortion becomes noise, degrading C/N (carrier-to-noise ratio).

By the way, the horizontal axes of Figure 11A and 11B have a common scale. The frequency band f5' to f6' of the second-order intermodulation distortion 3002' exists on the lower frequency side than the frequency band f1' to f4' of the signal group 3000', and the frequency band f7' to f8' of the third-order intermodulation distortion (IM3) 3003' exists within the frequency band f1' to f4' of the signal group 3000'.

More specifically, because the number of sub-carriers increases with increasing the number of channels, it is considered that the band of the second-order intermodulation distortion 3002', determined by the components of differential frequencies (i.e. a difference between f4' and fl') between the frequency bands, becomes broader due to he signal band broadened by the increase of the number of channels to overlap with the signal band (that is, f6' shifts to higher frequency side and gets close to f1', overlapping with the frequency band of the signal group 3000').

Further, the maximum level of the third-order inetrmodulation distortion 3003' existing within the band of the signal group 3003' becomes larger by one number of composites determined by the number of channels to be multiplexed.

For example, doubling of the channel number increases the number of composites by four times. For this reason, the increase of the number of channels results in a large increase of third-order intermodulation distortion.

Thus, by increasing the number of channels, intermodulation distortion (refereed to as distortion components) existing within the signal band also increases. As a result, there has been a problem that it becomes difficult to get a desired value of C/N during receiving.

### SUMMARY OF THE INVENTION

Considering these conventional problems described above, an object of the present invention is to provide a wavelength division multiplex optical transmitter, a wavelength division multiplex optical receiver, an optical transmission device and an optical transmission system which can ensure a high value of C/N (carrier-to-noise ratio) even in increased number of channels.

The 1st invention of the present invention is a wavelength division multiplex optical transmitter, comprising:
band division means of dividing an incoming frequency-multiplexed electrical signal into a plurality of frequency bands;
electricity-to-light conversion means of converting the electrical signals of said plurality of frequency bands into a plurality of optical signals using respective different wavelengths for each of the frequency bands; and
optical multiplex means of multiplexing each of said optical signals.

The 2nd invention of the present invention is the wavelength division multiplex optical transmitter according to 1st invention, wherein said dividing is performed such that a difference between the highest frequency and the lowest frequency in each frequency band of said plurality of frequency bands may be smaller than the difference between the highest frequency and the lowest frequency of said incoming frequency-multiplexed electrical signal.

The 3rd invention of the present invention is the wavelength division multiplex optical transmitter according to 1st invention, comprising FM modulation means of FM modulating at least one electrical signal of the electrical signals of said plurality of frequency bands into an FM signal and inputting the FM signal into said electricity-to-light conversion means.

The 4th invention of the present invention is the wavelength division multiplex optical transmitter according to 3rd invention, wherein an FM sub-carrier frequency of said FM signal is set such that signal-occupied bands will not overlap with each other.

The 5th invention of the present invention is the wavelength division multiplex optical transmitter according to 3rd invention, wherein the FM sub-carrier frequency of said FM signal is variable.

The 6th invention of the present invention is the wavelength division multiplex optical transmitter according to 1st invention, comprising frequency conversion means of performing frequency conversion by shifting at least one frequency band of said plurality of frequency bands toward the high frequency side or toward the low frequency side and inputting the resultant frequency-converted signal into said electricity-to-light conversion means.

The 7th invention of the present invention is the wavelength division multiplex optical transmitter according to 6th invention, comprising reference frequency signal generating means of generating a reference frequency signal to be utilized for said frequency conversion, said reference frequency signal being converted into optical signals of wavelengths different from any of said respective different wavelengths for each of the frequency bands, and multiplexed into said converted optical signals of different wavelengths from each other to be sent.

The 8th invention of the present invention is the wavelength division multiplex optical transmitter according to 1st invention, wherein said dividing into a plurality of frequency bands is based on the properties of said electrical signal and/or said optical signal, and
the intensity of the electrical signals of said plurality of frequency bands and/or the optical modulation degrees of said converted optical signals of different wavelengths from each other are different based on the properties of said electrical signal and/or said optical signal.

The 9th invention of the present invention is a wavelength division multiplex optical receiver, comprising:
light-to-electricity conversion means of converting an optical signal from the wavelength division multiplex optical transmitter according to 1st invention into an electrical signal; and
filter means of respectively reconstructing the electrical signals of said plurality of frequency bands by dividing said converted electrical signal into said plurality of frequency bands.

The 10th invention of the present invention is a wavelength division multiplex optical receiver, comprising:
wavelength separation means of performing the wavelength separating of an optical signal from the wavelength division multiplex optical transmitter according to 1st invention into a plurality of optical signals which is converted using said respective different wavelengths for each of bands; and
light-to-electricity conversion means of respectively reconstructing the electrical signals of said plurality of frequency bands by converting the plurality of said wavelength-separated optical signals into electrical signals.

The 11th invention of the present invention is the wavelength division multiplex optical receiver according to 9th or 10th inventions, comprising signal synthesis means of synthesizing and multiplexing the respectively reconstructed electrical signals of said plurality of frequency bands.

The 12th invention of the present invention is the wavelength division multiplex optical receiver according to 9th or 10th inventions, comprising FM demodulation means of FM demodulating the electrical signals of said plurality of frequency bands which have been respectively reconstructed from said FM-modulated optical signal from the wavelength division multiplex optical transmitter according to 3rd invention.

The 13th invention of the present invention is the wavelength division multiplex optical receiver according to 9th or 10th inventions, comprising frequency conversion means of performing a shift in the direction opposite to said shifting in respectively reconstructing the electrical signals of said plurality of frequency bands from an optical signal from the wavelength division multiplex optical transmitter according to 6th invention.

The 14th invention of the present invention is the wavelength division multiplex optical receiver according to 13th invention, comprising light-to-electricity conversion means of performing light-to-electricity conversion of said transmitted reference frequency signal in order to perform said sift in the opposite direction in respectively reconstructing the electrical signals of said plurality of frequency bands from an optical signal from the wavelength division multiplex optical transmitter according to 7th invention.

The 15th invention of the present invention is the wavelength division multiplex optical receiver according to 9th or 10th inventions, wherein the intensity of the electrical signals of said plurality of frequency bands and/or the optical modulation degrees of said converted optical signals of different wavelengths from each other are took into account in respectively reconstructing the electrical signals of said plurality of frequency bands from an optical signal from the wavelength division multiplex optical transmitter according to 8th invention, the intensity of the electrical signals of said plurality of frequency bands and the optical modulation degrees of said converted optical signals of different wavelengths from each other being different based on the properties of said electrical signals and/or said optical signal.

The 16th invention of the present invention is an optical transmission system, comprising:
the wavelength division multiplex optical transmitter according to 1st invention;
the wavelength division multiplex optical receiver according to 9th or 10th inventions; and
an optical transmission line of connecting said wavelength division multiplex optical transmitter and said wavelength division multiplex optical receiver and transmitting an optical signal.

The 17th invention of the present invention is an optical transmission system, comprising:
the wavelength division multiplex optical transmitter according to 3rd invention;
the wavelength division multiplex optical receiver according to 12th invention; and
an optical transmission line of connecting said wavelength division multiplex optical transmitter and said wavelength division multiplex optical receiver and transmitting an optical signal , wherein FM signals can be transmitted.

The 18th invention of the present invention is an optical transmission device, comprising:
a wavelength division multiplex optical transmitter having,
   (a-1) band division means of dividing a frequency-multiplexed electrical signal to be sent into a plurality of frequency bands,
   (a-2) electricity-to-light conversion means of converting the electrical signals of said plurality of frequency bands into a plurality of optical signals using respective different wavelengths for each of the frequency bands, and
   (a-3) optical multiplex means of multiplexing each of said optical signals and outputting the multiplexed optical signals to the outside; and
a wavelength division multiplex optical receiver having,
   (b-1) light-to-electricity conversion means of converting an optical signal to be received from the outside into an electrical signal, and
   (b-2) filter means of respectively reconstructing the electrical signals of said plurality of frequency bands by dividing said converted electrical signal into a plurality of predetermined frequency bands.

The 19th invention of the present invention is an optical transmission device, comprising:
a wavelength division multiplex optical transmitter having,
   (a-1) band division means of dividing a frequency-multiplexed electrical signal to be sent into a plurality of frequency bands,
   (a-2) electricity-to-light conversion means of converting the electrical signals of said plurality of frequency bands into a plurality of optical signals using respective different wavelengths for each of the frequency bands, and
   (a-3) optical multiplex means of multiplexing each of said optical signals and outputting the multiplexed optical signals to the outside; and
a wavelength division multiplex optical receiver having,
   (b-1) wavelength separation means of performing the wavelength separating of an optical signal to be received from the outside into a plurality of optical signals which is converted using respective different wavelengths for each of predetermined frequency bands, and
   (b-2) light-to-electricity conversion means of respectively reconstructing the electrical signals of said plurality of frequency bands by converting the plurality of said wavelength-separated optical signals into electrical signals.

The 20th invention of the present invention is the optical transmission device according to 18th or 19th inventions, wherein said wavelength division multiplex optical transmitter has FM modulation means of FM modulating at least one electrical signal of the electrical signals of said plurality of frequency bands into an FM signal and inputting the FM signal into said electricity-to-light conversion means, and
said wavelength division multiplex optical receiver has FM demodulation means of FM demodulating the electrical signal of said plurality of frequency bands which have been respectively reconstructed from said FM-modulated optical signal from said wavelength division multiplex optical transmitter.

The 21st invention of the present invention is a optical transmission system, comprising:
a plurality of the optical transmission devices according to 18th or 19th inventions; and
an optical transmission line of connecting said plurality of the optical transmission devices to each other by a predetermined method and transmitting an optical signal.

The 22nd invention of the present invention is the optical transmission system according to 21st invention, comprising:
an output transmission line connected to said optical multiplex means of said wavelength division multiplex optical transmitter;
an input transmission line connected to said optical-signal-receiving side of said wavelength division multiplex optical receiver;
an optical transmission line for connecting a plurality of said optical transmission devices and transmitting an optical signal; and
an optical multiplex and demultiplex portion or circulator for connecting said output transmission line, said input transmission line, and said optical transmission line.

The 23rd invention of the present invention is the wavelength division multiplex optical transmitter according to 1st invention, comprising:
signal amplification means of amplifying the electrical signals of said plurality of frequency bands respectively for each of said frequency bands; and
no loss matching circuit means which is band-matched with the signal band of at least an electrical signal on the high frequency band side of said band-divided electrical signals, and which is provided between said signal amplification means on said high frequency band side and said electricity-to-light conversion means.

The 24th invention of the present invention is the wavelength division multiplex optical receiver according to 9th invention, comprising:
no loss matching circuit means band-matched with the signal band of at least an electrical signal on the high frequency band side of the electrical signals of said plurality of frequency bands, which is output from said filter means; and
signal amplification means provided on the output side of said no loss matching circuit means.

The 25th invention of the present invention is the wavelength division multiplex optical receiver according to 10th invention, comprising:
no loss matching circuit means band-matched with the signal band of at least an electrical signal on the high frequency band side of the electrical signals of said plurality of frequency bands, which is output from said light-to-electricity conversion means; and
signal amplification means provided on the output side of said no loss matching circuit means.

The 26th invention of the present invention is the method of transmitting wavelength division multiplex optical signal, comprising:
a band dividing step of dividing an incoming frequency-multiplexedelectrical signal into a plurality of frequency bands;
an electricity-to-light converting step of converting the electrical signals of said plurality of frequency bands into a plurality of optical signals using respective different wavelengths for each of the frequency bands; and
an optical multiplexing step of multiplexing each of said optical signals.

The 27th invention of the present invention is the method of receiving wavelength division multiplex optical signal, comprising:
a light-to-electricity converting step of converting an optical signal by using the method of transmitting wavelength division multiplex optical signal according to the 26th invention into an electrical signal; and
a filtering step of respectively reconstructing the electrical signals of said plurality of frequency bands by dividing said converted electrical signal into said plurality of frequency bands.

The 28th invention of the present invention is the method of receiving wavelength division multiplex optical signal, comprising:
a wavelength separating step performing the wavelength separating of an optical signal by using the method of transmitting wavelength division multiplex optical signal according to the 26th invention into a plurality of optical signals which is converted using said respective different wavelengths for each of bands; and
a light-to-electricity converting step of respectively reconstructing the electrical signals of said plurality of frequency bands by converting the plurality of said wavelength-separated optical signals into electrical signals.

### BRIEF DESCRIPTION OF THE DRAWINGS

Figure 1 is a block diagram of the optical transmission system according to the embodiment 1 of the invention.
Figure 2 is a block diagram of the optical transmission system according to the embodiment 2 of the invention.
Figure 3 is a block diagram of the optical transmission system according to the embodiment 3 of the invention.
Figure 4 is a block diagram of the optical transmission system according to the embodiment 4 of the invention.
Figure 5 is a block diagram of the optical transmission system according to the embodiment 5 of the invention.
Figure 6 is a block diagram of the optical transmission system according to the embodiment 6 of the invention.
Figure 7 shows a frequency arrangement diagram in the embodiments of the invention.
Figure 8 shows a frequency arrangement diagram of FM converted signals described in the embodiment 4 of the invention.
Figure 9 is a block diagram of an optical transmission system according to the embodiment 7 of the invention.
Figure 10 is a block diagram of a conventional optical system.
Figure 11A shows a frequency arrangement diagram of conventionally transmitted signals.
Figure 11B shows a frequency arrangement diagram of non-linear distortion signals generated in conventionally transmitted signals.
Figure 12 is a block diagram of an optical transmission system according to a modification example of the embodiment 1 of the invention.
Figure 13 is a block diagram of an optical transmission system according to a modification example of the embodiment 2 of the invention.

### Description of Symbols

1, 101, 102, 103, 104 ... wavelength division multiplex transmitter
2, 201, 202, 203, 204, 205... wavelength division multiplex optical receiver
8, 9, 63, 64, 75, 76, 92, 114, 116 ... semiconductor laser 34, 35, 44, 45, 81, 82, 94, 136 ... light-to-electricity conversion portion
3 ... band division portion
12, 120 ... optical multiplex portion
31 ... optical branch portion
41, 130 ... optical demultiplex portion
20, 505 ... optical fiber
50 ... signal synthesis portion
4000 to 4003, 4102, 4103 ... no loss matching circuit

### PREFERRED EMBODIMENTS OF THE INVENTION

Hereinafter, the embodiments according to the invention will be described with reference to the drawings.

### (Embodiment 1)

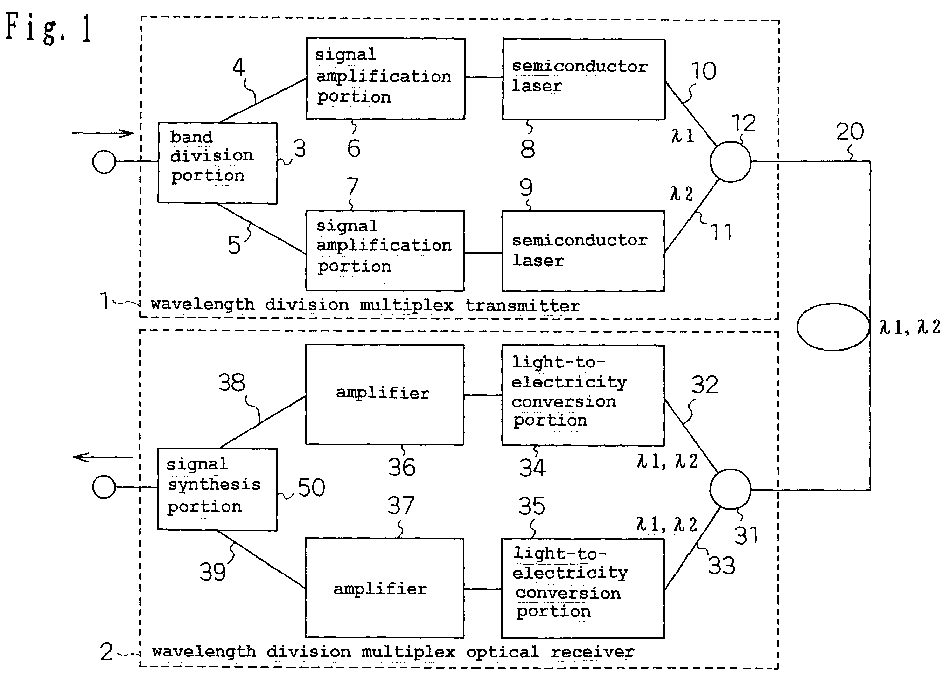

First, the configuration of the optical transmission system according to the present embodiment will be described with reference to Figure 1. Here, Figure 1 is a block diagram of the optical transmission system according to the embodiment.

The optical transmission system comprises a wavelength division multiplex optical transmitter 1, an optical fiber 20, and a wavelength division multiplex optical receiver 2.

The wavelength division multiplex optical transmitter 1 comprises a band division portion 3, signal amplification portions 6 and 7, semiconductor lasers 8 and 9 for performing electricity-to-light conversion, and an optical multiplex portion 12. An optical signal from the wavelength division multiplex optical transmitter 1 is transmitted through the optical fiber 20 and input into the wavelength division multiplex optical receiver 2.

Here, the semiconductor lasers 8 and 9 correspond to the electricity-to-light conversion means according to the invention.

The wavelength division multiplex optical receiver 2 comprises an optical branch portion 31, light-to-electricity conversion portions 34 and 35, amplifiers 36 and 37, and a signal synthesis portion 50.

Here, the light-to-electricity conversion portions 34 and 35 each have a photodetector having electrical output means. Further, a matching circuit having the function of a low pass filter is inserted in the electrical output means of the light-to-electricity conversion means 34, and a matching circuit having the function of a band pass filter is inserted in the electrical output means of the light-to-electricity conversion portion 35.

By the way, the means including the light-to-electricity conversion portions 34 and 35 corresponds to the means including the light-to-electricity conversion means and filter means according to the invention. Also, the means including the matching circuit according to the embodiment corresponds to the filter means according to the invention.

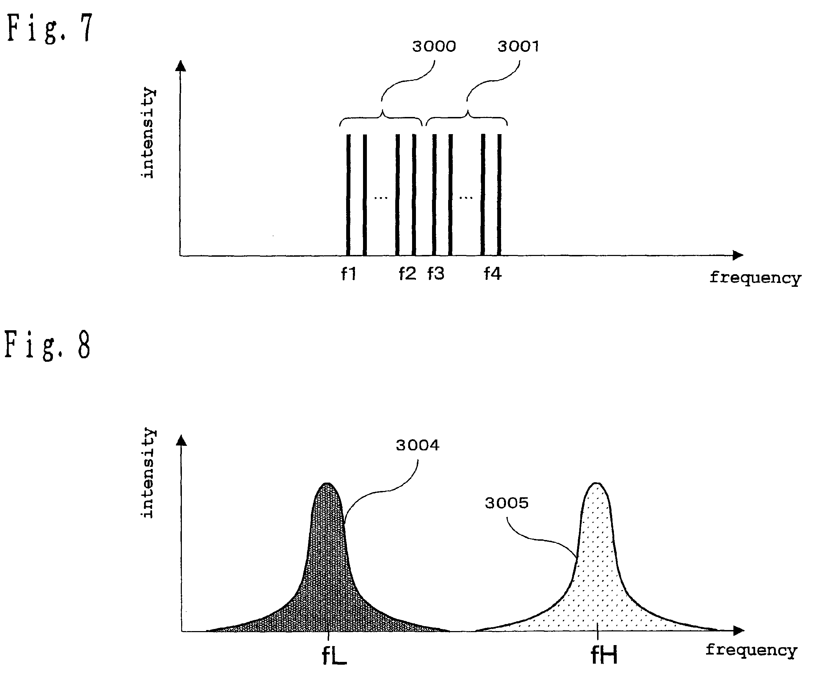

Next, the operation of the optical transmission system according to the embodiment will be described with reference to Figure 7 additionally. Here, Figure 7 shows a frequency arrangement diagram of a signal group to be transmitted.

As shown in Figure 7, an electrical signals obtained by frequency multiplexing of the sub-carriers having each of the frequencies f1 to f4 is input into the wavelength division multiplex optical transmitter 1. This input electrical signal is divided by the band division portion 3 into a signal group 3000 having a frequency band f1 to f2 and a signal group 3001 having a frequency band f3 to f4.

The signal group 3000 is input into the signal amplification portion 6 via a path 4, and converted into an optical signal having a wavelength λ1 by the semiconductor laser 8, and then the optical signal is output into an optical fiber 10. On the other hand, the signal group 3002 is amplified in the signal amplification portion 7 via a path 5 and converted into an optical signal having a wavelength λ2 different from the wavelength λ1, by the semiconductor laser 9 and then the optical signal is output into an optical fiber 11.

The optical signals of the wavelengths λ1 and λ2 are wavelength-multiplexed in the optical multiplex portion 12, and then transmitted from the wavelength division multiplex optical transmitter 1 through the optical fiber 20. The transmitted optical signal is input into the wavelength division multiplex optical receiver 2, in which it is branched by the optical branch portion 31, and then the branched optical signals are introduced into optical fibers 32 and 33, respectively. Here, the optical signal introduced into the optical fiber 32 and the optical signal introduced into the optical fiber 33 are identical optical signals.

The optical signal introduced into the optical fiber 32 is converted into an electrical signal by the light-to-electricity conversion portion 34. This light-to-electricity conversion portion 34 has response only to the frequency band f1 to f2 of the signal group 3000 due to the above described function of a low pass filter.

For this reason, the optical signal introduced into the optical fiber 32 is converted into the signal group 3000 having the frequency band from f1 to f2, and the signal group 3000 is amplified by the amplifier 36 and introduced into a path 38.

On the other hand, the optical signal introduced into the optical fiber 33 is converted into an electrical signal by the light-to-electricity conversion portion 35. This light-to-electricity conversion portion 35 has response only to the frequency band f3 to f4 of the signal group 3001 due to the above described function of a band pass filter.

For this reason, the optical signal introduced into the fiber 33 is converted into the signal group 3001 having the frequency band f3 to f4, and the signal group 3001 is amplified by the amplifier 37 and introduced into a pass 39.

These two electrical signals are synthesized by the signal synthesis portion 50, and thereby the original signal that has been multiplexed into the signal groups 3000 and 3001 can be obtained again (see Figure 7).

By the configuration as described above, a signal to be sent is divided into more than two frequency bands, and (1) by decreasing the number of sub-carriers in each of the frequency bands, the above described intermodulation distortion in each of the frequency bands can be reduced, and further (2) by converting the above divided signals into optical signals of different wavelengths for each of the frequency bands and optically transmitting the optical signals, no intermodulation distortion is generated between each of the frequency bands, allowing the sending of optical signals of low-distortion.

Thus, according to this embodiment, for the above described reasons, both second-order intermodulation distortion and third-order intermodulation distortion are reduced in each of the frequency bands.

Further, by dividing a signal band, the semiconductor laser 8 of this embodiment have only to convert signals of the lower frequency band to optical signals, allowing the use of low-cost semiconductor lasers of which broad band response is not required (for example, a coaxial type or surface-mount type module).

Furthermore, by changing the frequency response characteristics of the respective light-to-electricity conversion portions 34 and 35 for each of the signal groups during receiving optical signals, it is possible to suppress the generation of intermodulation distortion between the signal groups during receiving and obtain received signals of low distortion.

By the way, concerning means of controlling (limiting) the frequency response on the optical signal receiving side, as described above, it is possible to utilize the electrical output means of the photodetector constituting the light-to-electricity conversion portion, which output means includes an inserted matching circuit having a low pass filter on the lower frequency side and a band pass filter function including a pass band on the high frequency side, for example,.

### (Embodiment 2)

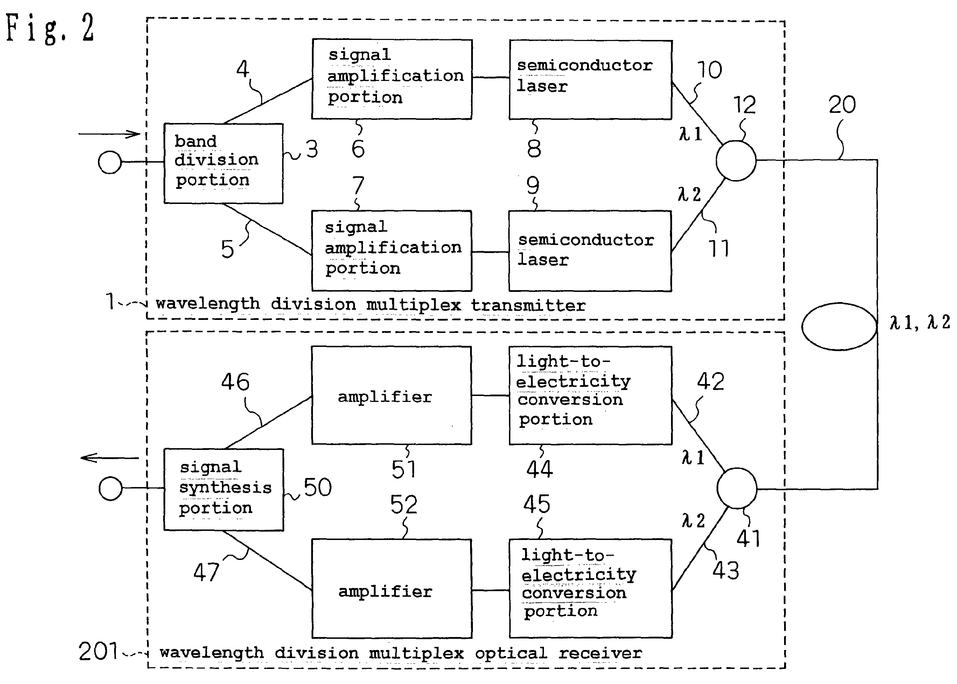

Next, the configuration and operation of the optical transmission system according to the present embodiment will be described with reference to Figure 2. Here, Figure 2 is a block diagram of the optical transmission system according to the embodiment.

The optical transmission system according to the embodiment is different from the embodiment 1 described above primarily from the following two points of view.

The two points are as follows; (1) when an optical signal is input into a wavelength division multiplex optical receiver 201, a demultiplex portion 41 performs wavelength separation of the optical signal into light beams of a wavelength λ1 and a wavelength λ2, and the light beams are introduced into optical fibers 42 and 43, respectively; (2) the optical signal of the wavelength λ1 is converted into an electrical signal of the group 3000 in a light-to-electricity conversion portion 44, and the electrical signal is introduced into a path 46 via an amplifier 51. The optical signal of the wavelength λ2 is converted into an electrical signal of the signal group 3001 in a light-to-electricity conversion portion 45, and the electrical signal is introduced into a path 47 via an amplifier 52.

By the way, the means including the light-to-electricity conversion portions 44 and 45 corresponds to the light-to-electricity conversion means according to the invention.

Therefore, according to the optical transmission system of the embodiment, in the wavelength division multiplex optical receiver, the wavelength-multiplexed light beam is subjected to wavelength separation, and each of the wavelength-separated light beams is converted from light to electricity. Thereby, no intermodulation distortion between signal groups is generated in the light-to-electricity conversion portion, thus allowing transmission of lower distortion together with the wavelength division multiplex optical transmitter.

### (Embodiment 3)

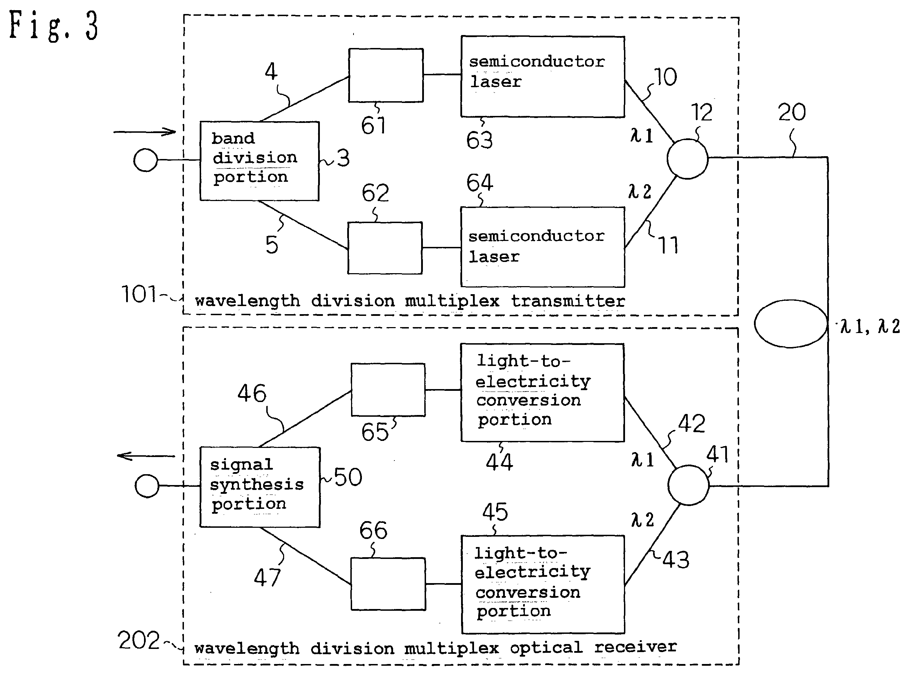

Next, the configuration of the optical transmission system according to the present embodiment will be described with reference to Figure 3. Here, Figure 3 is a block diagram of the optical transmission system according to the embodiment.

The configuration of the optical transmission system according to the present embodiment is different from the optical transmission system according to the embodiments 1 and 2 described above primarily from the following two points of view.

The two points are as follows; (1) in a wavelength division multiplex optical transmitter 101, the total modulation degree in converting of an electrical signal into an optical signal by a signal amplification portion 61 and a semiconductor laser 63 and the total modulation degree in converting of an electrical signal into an optical signal by a signal amplification portion 62 and a semiconductor laser 64 can be made different from each other depending on the transmission quality required from the signals divided into bands by a band division portion 3, and (2) in an wavelength division multiplex optical receiver 202, the total light-to-electricity conversion efficiency by a light-to-electricity conversion portion 44 and an amplifier 65 and the light-to-electricity conversion efficiency by a light-to-electricity conversion portion 45 and an amplifier 66 can be made different from each other depending on signal components (e.g. amplitude) of the light beam of each wavelength transmitted from the wavelength division multiplex optical transmission portion.

Next, the operation of the optical transmission system of the present embodiment will be described.

Here, in the embodiment, it is assumed that the signal group 3000 is made up of an analog-modulated signal group and the signal group 3001 is made up of a digitally modulated signal group.

The wavelength division multiplex optical transmitter 101 (1) sets the semiconductor laser 63 such that the optical modulation degree of an optical signal of wavelength λ1 for transmitting the signal group 3000 may be an optical modulation degree suitable for analog modulation (i.e. an optical modulation degree not generating nonlinear distortion during modulation (percentage optical-modulation of 35% or less ) ) , and (2) increases the output light intensity level by increasing the current value of a bias current of the semiconductor 63 and adjusting the intensity of the electrical signal by the signal amplification portion 61.

Here, the reason for increasing the current value of the bias current of the semiconductor laser 63 is because the output light intensity level (average output light intensity level in the embodiment) of the semiconductor laser 63 is determined not by the intensity of the electrical signal to be modulated (an AC signal in the embodiment) , but by the current value of the bias current provided as a bias.

However, when the current value of a bias current is increased, it is also necessary to increase the intensity of an electrical signal to be modulated in order to obtain the same optical modulation degree.

Further, in the optical transmission of an analog signal, it is desired that the sending and receiving should be performed at a high output light intensity level in order to ensure a predetermined value of C/N.

On the other hand, the wavelength division multiplex optical transmitter 101 sets the percentage optical-modulation of the optical signal of wavelength λ2 transmitting the signal group 3001 to about 100% by the semiconductor laser 64 in order to increase extinction ratio.

A total optical modulation degree in converting an electrical signal into an optical signal is adjusted in this manner, and the optical beams having these wavelengths λ1 and λ2 are wavelength-multiplexed in an optical multiplex portion 12, and then transmitted.

Although the wavelength division multiplex optical receiver 202 performs the light-to-electricity converting of an optical signal subjected to wavelength separation in wavelength separation portion 41, the analog optical signal (wavelength λ1) is converted into an electrical signal by the light-to-electricity conversion portion 44 and the amplifier 65 and the digital optical signal (wavelength λ2) is converted into an electrical signal by the light-to-electricity conversion portion 45 and the amplifier 66, respectively.

Then, when each of the electrical signals is synthesized by a signal synthesis portion 50, the total light-to-electricity conversion efficiency of each signal path is adjusted such that the level deviation between the respective signal groups may be the same as the original signals.

In such manner, according to signals to be transmitted, the light beam sending side adjusts the optical modulation degree and output optical intensity and the light beam receiving side adjusts the light-to-electricity conversion efficiency, so that a transmission system for satisfying signal transmission quality for each signal can be constructed.

Although an example of the transmitting of an analog signal and a digital signal was described herein, the embodiment is not limited to this case but can be applicable to signal groups having a difference in predetermined C/N values therefor.

In this case, it is possible to realize, in the transmission of an optical signal, the same effects as what is called emphasis on the sending side and de-emphasis on the receiving side.

By the way, in the present embodiment described above, the intensity of electrical signals of a plurality of frequency bands according to the invention is determined such that the light intensity of the analog-modulated electrical signal may be increased during sending and receiving of light.

However, the embodiment is not limited to this, but the intensity of the electrical signals of a plurality of frequency bands according to the invention can be set, for example, such that the light intensity for the electrical signal having a larger predetermined value of C/N may be increased during sending and receiving of light.

Briefly speaking, the intensity of electrical signals of a plurality of frequency bands according to the invention can be different based on the properties of electrical signals and/or optical signals.

Further, in the above described embodiment, the optical modulation degrees of optical signals of converted different wavelengths according to the invention is determined such that the optical modulation degree of the analog-modulatedoptical signal may be small not to generate non-linear distortion, and such that the optical modulation degree of the digitally modulated optical signal may be about 100%.

However, the embodiment is not limited to this, but, briefly speaking, the optical modulation degrees of the optical signals of converted wavelengths different from each other according to the invention can be different based on the properties of the electrical signals and/or the optical signals.

Further, in the above described embodiment, both of the intensity of electrical signals of a plurality of frequency bands and the optical modulation degrees of the optical signals of converted different wavelengths according to the invention are different based on the electrical signals and/or the optical signals.

However, the embodiment is not limited to this, but at least one of the intensity of electrical signals of a plurality of frequency bands and the optical modulation degrees of the optical signals of converted different wavelengths according to the invention can be different based on the properties of the electrical signals and/or the optical signals.

Further, in respectively reconstructing the electrical signals of a plurality of frequency bands from optical signals from the wavelength division multiplex optical transmitter according to the invention, when the electrical signals is synthesized by the signal synthesis portion 50, the total light-to-electricity conversion efficiency is adjusted such that the level deviation between each of the signal groups may be the same as the original signal.

However, the embodiment is not limited to this, but in respectively reconstructing the electrical signals of a plurality of frequency bands from the optical signals from the wavelength division multiplex optical transmitter according to the invention, briefly speaking, it is sufficient to consider the intensity of the electrical signals of a plurality of frequency bands and/or the optical modulation degrees of the optical signals of converted different wavelengths, which intensity and optical modulation degrees each are different based on the properties of the electrical signals and/or optical signals.

### (Embodiment 4)

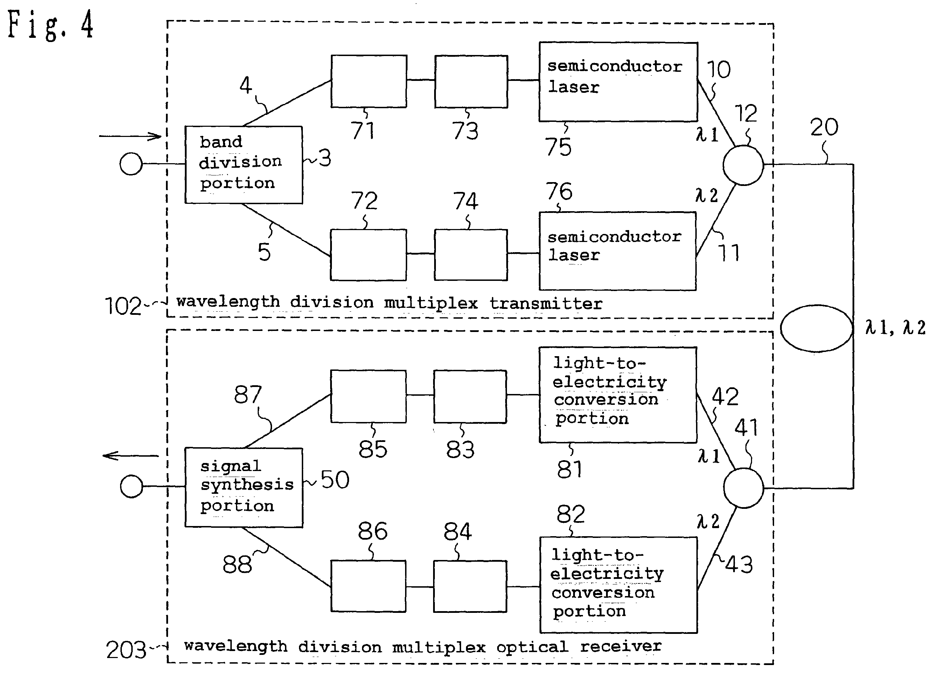

Next, the configuration and operation of the optical transmission system according to the present embodiment will be described with reference to Figures 4 and 8. Here, Figure 4 is a block diagram of the optical transmission system according to the present embodiment, and Figure 8 shows a frequency arrangement diagram of an FM converted signal.

The configuration of the optical transmission system according to the embodiment comprises FM modulation portions 71 and 72 and FM demodulation portions 85 and 86, in the points of which the present embodiment is different from the optical transmission system according to the embodiment 2 described above.

One signal group 3000 divided by the band division portion 3 of the wavelength division multiplex optical transmitter 102 is input into the FM modulation portion 71 via a path 4 and FM converted therein.

The FM converted signal becomes a signal 3004 centered at an FM carrier frequency fL as shown in Figure 8, and the signal 3004 is input into a semiconductor laser 75 via a band pass filter 73, generating an optical signal of wavelength λ1.

On the other hand, another signal group 3001 having its band divided is FM converted in an FM modulation portion 72 via a path 5. The FM converted signal becomes a signal 3005 centered at an FM carrier frequency fH as shown in Figure 8, and the signal 3005 is input into a semiconductor laser 76 via a band pass filter 74, generating an optical signal of wavelength λ2.

By the way, the band pass filters 73 and 74 is to remove unwanted spectra generated in the side bands of the signals 3004 and 3005 (see Figure 8), which spectra may cause spurious output on the receiving side.

Of course, if the FM modulation portions 71 and 72 can perform FM conversion with sufficiently high accuracy, few unwanted spectra as described above are generated, and therefore the band pass filters 73 and 74 become unnecessary.

The optical signals of these two different wavelengths are wavelength-multiplexed in the optical multiplex portion 12 to be transmitted through the optical fiber 20. The transmitted wavelength-multiplexed light beam is input into a wavelength division multiplex optical receiver 203, and subjected to wavelength separation in an optical multiplex portion 41.

The optical signal of wavelength λ1 passes through an optical fiber 42 and is converted into an electrical signal in a light-to-electricity conversion portion 81. Then, the electrical signal is demodulated into the signal group 3000 in an FM demodulation portion 85 after signal amplification by an amplifier 83.

On the other hand, the optical signal of wavelength λ2 passes through an optical fiber 43 and is converted into an electrical signal in a light-to-electricity conversion portion 82. Then, the electrical signal is demodulated into the signal group 3001 in an FM demodulation portion 86 after signal amplification by an amplifier 84. These two demodulated signals are synthesized in a signal synthesis portion 50, and taken out as the original signal.

Providing such FM modulation portion and FM demodulation portion can reduce signal-quality degradation caused by light beams reflected back during transmitting through an optical fiber.

By the way, although the present embodiment uses two FM carrier frequencies fL and fH different from each other, the use of wavelength division multiplex transmission would provide no limit on the setting of carrier frequencies because FM carriers of different wavelengths do not cause interference with each other.

Therefore, (1) it is not objectionable that the signals after FM conversion overlap with each other on the frequency axis, and (2) particularly, fL = fH is not objectionable. However, in order to perform the easy division of electrical signals into a plurality of frequency bands on the receiving side, FM carrier frequencies of FM signals are desirably set such that their signal-occupied bands may not overlap with each other.

Further, if FM carrier frequencies are variable, by resetting FM carrier frequencies so as to minimize possible distortion generated during FM demodulation, the optical signal transmission of better quality can be maintained.

Furthermore, although the present embodiment performs FM conversion in each of signal paths, it is possible to configure at least one of the paths for use in FM conversion.

For example, if a certain signal group is analog signals requiring high transmission quality, FM conversion is used for the signal group, and if the other signal group is digital signals not requiring so high transmission quality, a desired quality may be still satisfied by converting the other signal group, without FM conversion, into an optical signal for optical transmission.

Further, as the FM modulation portion, for example a voltage-controlled oscillator can be used. The voltage-controlled oscillator can be an oscillator using a varactor or a reactance transistor and a digital oscillator using a multivibrator.

Further, after once integrating an AM signal to convert it into a phase modulated signal, it is possible to generate a narrow band FM signal using a balanced modulator.

Further, the configuration of the FM demodulation portion is desirably of a delay line type or pulse count type having a broad band and good linearity, though there are a number of configurations of the FM demodulation portion.

For example, it is two output elements and AND elements which are high speed digital elements, and elements using delay circuits (not shown).

Further, the configuration of the FM demodulation portion is not limited to the above described configurations , and itmaybe a circuithaving the function of frequency discrimination, such as a double tuned frequency discriminator, a Foster-Seeley discriminator and a ratio detector.

### (Embodiment 5)

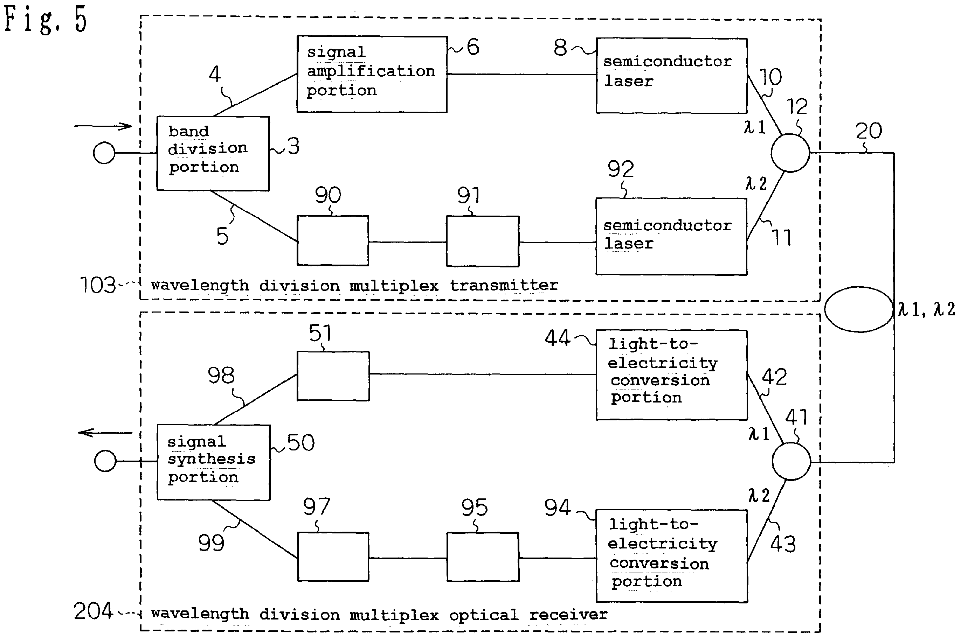

Next, the configuration and operation of the optical transmission system according to the present embodiment will be described with reference to Figure 5.

Here, Figure 5 is a block diagram of the optical transmission system according to the embodiment.

The optical transmission system according to the embodiment is different from the embodiment 2 described above primarily from the following two points of view.

The two points are as follows; (1) the signal group 3001 has its signal band shifted to the lower frequency side in a frequency conversion portion 90 of a wavelength division multiplex optical transmitter 103, and then is converted into an optical signal of wavelength λ2 by a semiconductor laser 92 via a signal amplification portion 91, and (2) an optical signal of wavelength λ2 obtained by wavelength separation in the optical demultiplex portion 41 of a wavelength division multiplex optical receiver 204 is converted into an electrical signal in a light-to-electricity conversion portion 94, which electrical signal is shifted, .in the direction opposite to the previous shift, to the frequency band of the original signal group 3001 in a frequency conversion portion 95 and input into a signal synthesis portion 50 via an amplifier 97, and then output as the original signal therefrom.

Here, because how shift has been performed in the frequency conversion portion 90 on the sending side is provided in advance to the receiving side, the shift of such opposite direction in the frequency conversion portion 95 can be performed simply and conveniently.

By the way, the frequency conversion portion 95 corresponds to the frequency conversion means according to the invention.

Therefore, according to the optical transmission system of the embodiment, by shifting the signal of a high frequency region to the lower frequency side, not only the frequency response required of the semiconductor laser can be eased in the high frequency region, but also the required frequency response of the photodetector of the light-to-electricity conversion portion can be eased in the high frequency region. As a result, the optical transmission device of low cost can be used, and also the apparatus can be made low cost.

### (Embodiment 6)

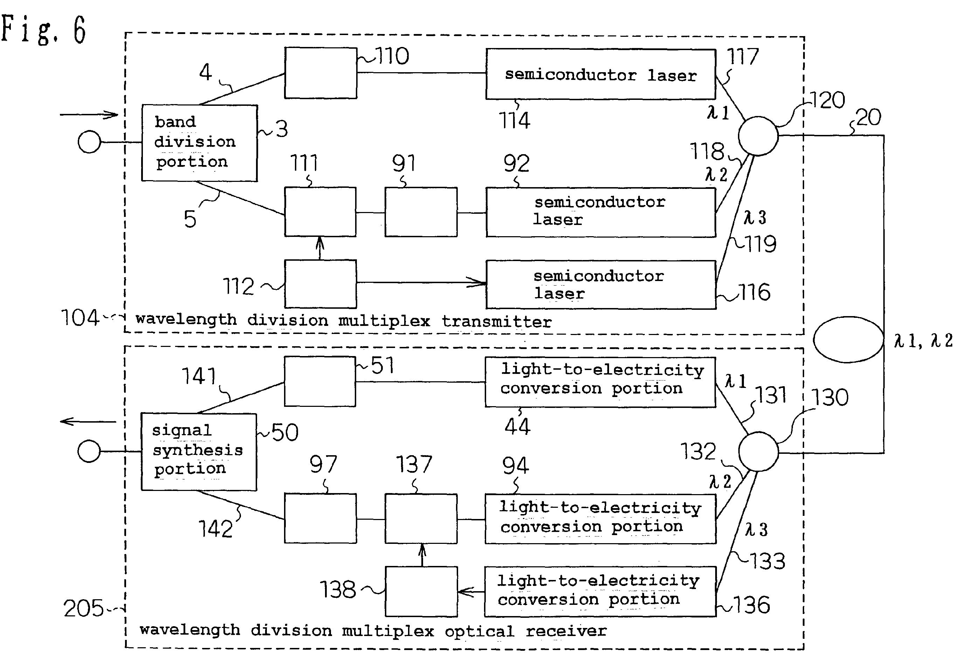

Next, the configuration and operation of the optical transmission system according to the present embodiment will be described with reference to Figure 6.

Here, Figure 6 is a block diagram of the optical transmission system according to the embodiment.

The optical transmission system according to the embodiment is different from the embodiment 5 described above primarily from the following two points of views.

The two points are as follows; (1) a frequency conversion portion 111 of a wavelength division multiplex optical transmitter 104 provides, from a signal generation portion 112, a reference frequency for frequency-shifting of the signal group 3001, and the reference frequency signal is converted into an optical signal of a different wavelength λ3 by a semiconductor laser 116, and the optical signal is wavelength-multiplexed together with the signals of wavelengths λ1 and λ2 in an optical multiplex portion 120 to be transmitted therefrom, and (2) an optical demultiplex portion 130 of a wavelength division multiplex optical receiver 205 performs wavelength separation of the above described optical signals, which have been wavelength-multiplexed in the optical multiplex portion 120, into optical signals having wavelengths λ1 to λ3, among which the optical signal of wavelength λ3 is converted into an reference frequency signal in a light-to-electricity conversion portion 136 via an optical fiber 133, which reference frequency signal is , via an amplifier 138, took into a frequency conversion portion 137 to be used as a reference signal for frequency-shifting of the signal obtained by converting the optical signal of wavelength λ2 into an electrical signal.

By the way, the light-to-electricity conversion portion 136 corresponds to the light-to-electricity conversion means according to the invention. Further, the frequency conversion portion 137 corresponds to the frequency conversion means according to the invention.

Therefore, according to the optical transmission system of the embodiment, because a reference frequency signal on the sending side can be used on the receiving side as it is, not only the accuracy of frequency shift is improved, but also even the change of the reference frequency on the sending side is detected in real time on the receiving side, allowing an accurate shift of frequency to be performed.

By the way, the frequency conversion according to the invention is performed by a shift toward the lower frequency side in the embodiment described above.

However, not limited to this, the frequency conversion according to the invention can be performed by shifting toward the higher frequency side, for example, when the wavelength division multiplex optical receiver exhibit better response in a band of the high frequency region. Briefly speaking, the frequency conversion according to the invention can be performed by shifting at least one frequency band of a plurality of frequency bands toward the higher frequency side or toward the lower frequency side.

Here, when the frequency conversion is performed by such shifting on the sending side, frequency conversion means of performing a shift in the direction opposite to this shift is necessary on the receiving side.

### (Embodiment 7)

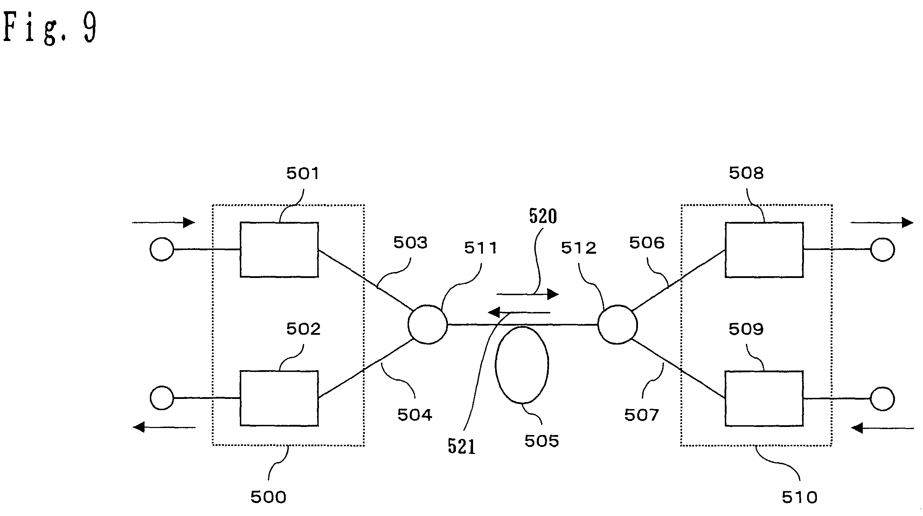

Next, the configuration of the optical transmission system according to the present embodiment will be described with reference to Figure 9.

Here, Figure 9 is a block diagram of the optical transmission system according to the embodiment.

An optical transmission device 500 comprises a wavelength division multiplex optical transmitter 501, an output fiber 503, a wavelength division multiplex optical receiver 502, and an input fiber 504. Also, an optical transmission device 510 comprises a wavelength division multiplex optical transmitter 509, an output fiber 507, a wavelength division multiplex optical receiver 508, and an input fiber 505.

The output fiber 503 and the input fiber 504 are connected to an optical fiber 505 through an optical multiplex and demultiplex portion 511. Also, the output fiber 507 and the input fiber 506 are connected to the optical fiber 505 through an optical multiplex and demultiplex portion 512.

Next, the operation of the optical transmission device according to the embodiment will be described.

Here, the wavelength range of optical signals output from the wavelength division multiplex optical transmitter 501 is a 1.3 µm range, and the wavelength range of optical signals output from the wavelength division multiplex optical transmitter 509 is a 1.5 µm range.

Further, the wavelength division multiplex optical transmitter and the wavelength division multiplex optical receiver according to the embodiment are, for example, the wavelength division multiplex optical transmitter and the wavelength division multiplex optical receiver that have been described in the above described embodiments 1 to 6.

A signal group input into the wavelength division multiplex optical transmitter 501 is converted into a wavelength-multiplexed optical signal of the 1.3 µm range, which is input into the optical multiplex and demultiplex portion 511 through the optical fiber 503 and then transmitted through the optical fiber 505.

In this way, the optical signal transmitted from the side of the optical transmission device 500 passes through the optical fiber 506 from the optical multiplex and demultiplex portion 512 to be input into the side of the optical transmission device 510, and then is took out as the original signal group in the wave length division multiplex optical receiver 508.

On the other hand, a signal group input into the wavelength division multiplex optical transmitter 509 is converted into a wavelength-multiplexed optical signal of the 1.5 µm range, which is input into the optical multiplex and demultiplex portion 512 through the optical fiber 507 and then transmitted through the optical fiber 505.

In this way, the optical signal transmitted from the side of the optical transmission device 510 passes through the optical fiber 504 from the optical multiplex and demultiplex portion 511 to be input into the side of the optical transmission device 500, and then is took out as the original signal group by the wavelength division multiplex optical receiver 502.

Here, any optical device which is capable of synthesis and separation of the light beam of the 1.3 µm range and the light beam of the 1.5 µm range can be used for the optical multiplex and demultiplex portions 511 and 512.

In this way, bidirectional optical transmission is possible through a single optical fiber 505.

By the way, although the optical transmission device comprises one each of the wavelength division multiplex optical transmitter and the wavelength division multiplex optical receiver in the present embodiment described above, the embodiment is not limited to this, but the optical transmission device may comprise a plurality of the wavelength division multiplex optical transmitters and wavelength division multiplex optical receivers respectively.

When the optical transmission device comprises a plurality of the wavelength division multiplex optical transmitters and wavelength division multiplex optical receivers, for example, a 1.4 µm range and a 1.6 µm range can be used as the new wavelength range of optical signals . In this way, transmission capacity can be easily increased.

Further, as the semiconductor laser, long wavelength lasers of In P based materials having a wavelength range of 1.2 - 1.6 µm, semiconductor lasers of a 0.98 µm range, lasers of GaAlAs based materials having oscillation wavelength of a 0.78 µm range can be used.

Further, as the optical fiber, for example, general optical fibers can be used. These include the general optical fibers of a core diameter of 10 - 300 µm, for example. By the way, any of the multi-mode optical fibers and the single-mode optical fibers is available.

Further, although the number of band division is 2 and the number of wavelengths for multiplex transmission is 2 or 3 in the present embodiment described above, the embodiment is not limited to this. Briefly speaking, the number of signal bands to be divided is not limited. Also, the number of wavelengths is not limited as far as it is within the transmittable range of the optical fiber, provided the wavelengths are different from each other and wavelength interval between them is ensured to such an extent that disturbance such as interference may not occur (for example, 0.2 nm or more, or uneven intervals).

Further, the above described embodiment explains the case where the output fiber 503 (507) and the input fiber 504 (506) are connected to the optical fiber 505 by the optical multiplex and demultiplex portion 511 (512), for example. However, the embodiment is not limited this, for example, a three-terminal circulator for use in optical signals can be used instead of the optical multiplex and demultiplex 511 (512). In this case, different from the above case, even if the wavelengths λ1 to λ3 of the optical signals transmitted along the optical transmission direction 520 shown in Figure 9 and the wavelengths λ4 to λ6 of the optical signals transmitted along the optical transmission direction 521 have relations λ1 = λ4, λ2 = λ5, and λ3 = λ6 (where λ1 ≠ λ2 ≠ λ3), the same optical multiplexing and optical demultiplexing as described above are possible.

Further, although an amplifier is provided in the present embodiment described above, it is unnecessary to insert an amplifier when enough signal levels can be ensured.

As apparent from the above description, the invention provides, for example, a wavelength division multiplex optical transmitter which comprises a signal input portion into which signals using a single sub-carrier or a plurality of signals multiplexed with a plurality of sub-carriers are input, a band division portion for dividing or branching the above described plurality of signals into at least two frequency bands, a plurality of electricity-to-light conversion portions for converting the signals of the plurality of divided frequency bands into light beams each having a wavelength different from each other, and an optical multiplex portion for multiplexing the light beams of mutually different wavelengths from the above described plurality of electricity-to-light conversion portions to output as a wavelength-multiplexed light beam.

Further, the invention can be configured so as to convert respectively the signals of a plurality of the divided bands into a plurality of FM signals using a plurality of FM conversion portions.

Furthermore, the invention can be configured so as to have a frequency conversion portion sifting signal bands for at least one of the divided signals.

Further, the inventionprovides, for example, a light detection portion for receiving a wavelength-multiplexed light beam from the wavelength division multiplex optical transmitter described above to perform light-to-electricity conversion thereof, and a wavelength division multiplex optical receiver for dividing the electrical signals from the above described light detection portion into at least two frequency bands which do not overlap with each other.

Further, the invention can be configured with the wavelength division multiplex optical receiver characterized by an optical demultiplex portion for performing wavelength-separation of a wavelength-multiplexed light beam from the wavelength division multiplex optical transmitter into at least two light beams of a plurality of different wavelengths, and by converting the above described light beams of the plurality of wavelengths into electrical signals by a plurality of light detection portions performing light-to-electricity conversion and outputting the electrical signals.

Further, the configuration according to the invention can have a signal synthesis portion for synthesizing and multiplexing of the electrical signals from the above described plurality of photodetectors. When the wavelength division multiplex optical receiver receives an FM signal as a input signal, it has an FM demodulation portion for demodulating the FM signal from the photodetector.

Further, the configuration according to the invention may also comprise a optical branch portion for branching a input light beam into a plurality of light beams and a plurality of light detection portions, into which the light beams branched into plurality are input. Therein, the plurality of light detection portions may also have different response bands.

Further, the configuration according to the invention may also comprise at least one frequency conversion portion for performing frequency conversion of the electrical signals from the plurality of light detection portions.

Further, the configuration according to the invention can be configured such that a reference frequency signal obtained by wavelength separation and light-to-electricity conversion of a wavelength-multiplexed light beam, optically transmitted from the wavelength division multiplex optical transmitter, may be used as a reference frequency signal for frequency conversion.

Further, the invention relates to, for example, an optical transmission device characterized by comprising the wavelength division multiplex optical transmitter and at least one wavelength division multiplex optical receiver.

Further, the invention provides an optical transmission system characterized by comprising the wavelength division multiplex optical transmitter described above, an optical transmission line for transmitting light from the wavelength division multiplex optical transmitter, and at least one optical receiver for receiving light transmitted through the above described optical transmission line.

Also, the invention provides an optical transmission system characterized by comprising at least two optical transmission devices described above, wherein the input and output of each of the above described optical transmission devices are coupled to each other by one optical transmission line having an optical multiplex portion and an optical separation portion and optical signals are bidirectionally transmitted through the optical transmission line.

According to such a configuration, even in transmitting of multichannel carrier-multiplexed signals, the signal bands are divided and the divided bands each are multiplexed and transmitted with each light of a different wavelength, which each light is converted into electrical signals after wavelength separation and then the electrical signals are synthesized. For this reason, because no intermodulation occurs between the signals of the respective wavelength-multiplexed light beams during transmission, it is possible to suppress intermodulation distortion generated in the signal band after receiving and synthesizing when compared to the case where the whole of the signal band is transmitted.

By the way, in the present embodiment described above, the division of a signal band into a plurality of frequency bands according to the invention is performed into a frequency band (f1 to f2) located on the lower frequency side and a frequency band (f3 to f4) located on the higher frequency side.

However, the division into a plurality of frequency bands according to the invention, not limited to this, may be performed into frequency bands (f1 to f5, f6 to f4) located in both end portions and frequency bands (f5 to f2, f3 to f6) located in central portion (f1 ≤ f5 ≤ f2, f3 ≤ f6 ≤ f4).

When such divisions are performed, a difference between the highest frequency and the lowest frequency of the frequency band in the both end portions is equal to the difference between the highest frequency and the lowest frequency of an incoming frequency-multiplexed electrical signal, which is f4 - f1. Therefore, from the above described reason, adverse effects caused by third-order intermodulation distortion can be removed, but adverse effects caused by second-order intermodulation distortion can not be removed.

However, in this case, if a difference between the frequencies of the respective subcarriers themselves can be made small, a difference between the highest frequency and the lowest frequency in the frequency bands becomes small, allowing the adverse effects caused by second-order intermodulation distortion to be removed to some extent.

Further, the wavelength division multiplex optical receiver according to the invention comprises a signal synthesis portion 50. However, not limited to this, the wavelength division multiplex optical receiver according to the invention need not comprise signal synthesis means of synthesizing and multiplexing electrical signals of a plurality of frequency bands respectively reconstructed.

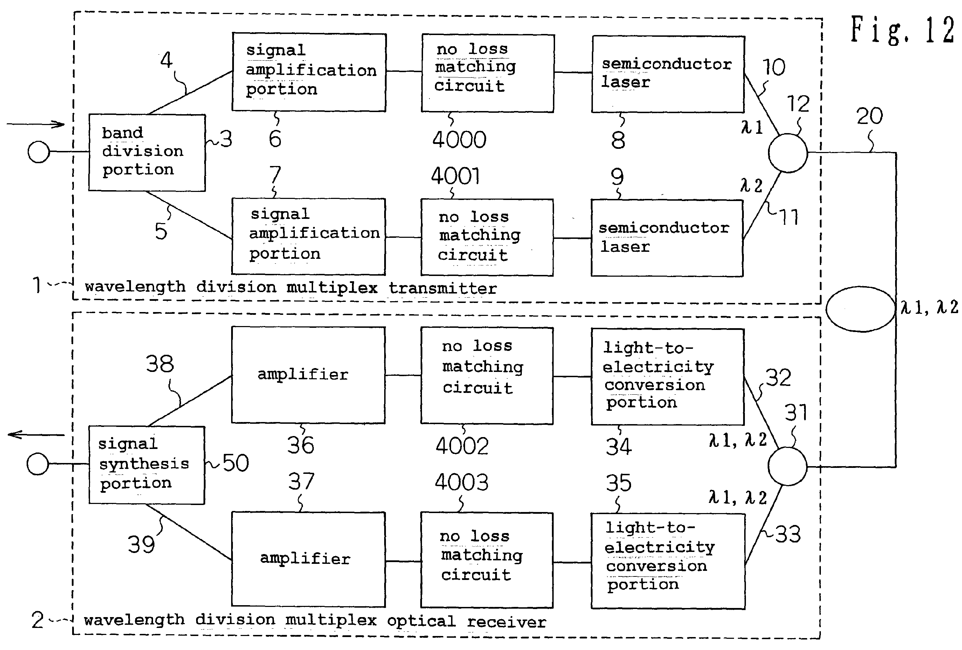

Further, in the above described embodiments, for example as shown in Figure 1, the wavelength division multiplex transmitter according to the invention is described for the case where the semiconductor lasers 8 and 9 are connected to the output sides of the signal amplification portions 6 and 7. However, for example as shown in Figure 12, not limited to this , the wavelength division multiplex optical transmitter according to the invention may be configured such that no loss matching circuits 4000 and 4001 band-matched with the signal bands of electrical signals divided into bands may be inserted between signal amplification portions 6' and 7' and the semiconductor lasers 8 and 9.

Further, as another example, it can be configured such that no loss matching circuit 4001 may be inserted at least on the high frequency band side. This allows electrical gain to be higher at least on the high frequency band side, and thus the load of the signal amplification portion 7 can be reduced on the higher band side by that amount. That is, it becomes possible to reduce the power consumption and parts count of the signal amplification portion 7. Further, when no loss matching circuit 4000 is inserted in the path of the low frequency band side, it becomes also possible to reduce the power consumption and parts count of the signal amplification portion 6.

Further, in the above embodiments, for example, as shown in Figure 1, the wavelength division multiplex receiver according to the invention is described for the case where the amplifiers 36 and 37 are connected to the output sides of the light-to-electricity conversion portions 34 and 35. However, the wavelength division multiplex receiver according to the invention, not limited to this, may be configured such that no loss matching circuits 4002 and 4003 band-matched with the signal bands of electrical signals divided into bands may be inserted between the light-to-electricity conversion portions 34 and 35 and the amplifiers 36 and 37, for example as shown in Figure 12.

Further, as another example, it can be configured such that no loss matching circuit 4003 may be inserted at least on the high frequency band side. This allows electrical gain to be higher at least on the high frequency band side, and thus the load of the signal amplification portion 37 can be reduced on the high frequency band side by that amount. That is, it becomes possible to reduce the power consumption and parts count of the signal amplification portion 37. Further, when no loss matching circuit 4002 is also inserted in the path of the low frequency band side, it becomes also possible to reduce the power consumption and parts count of the signal amplification portion 36.

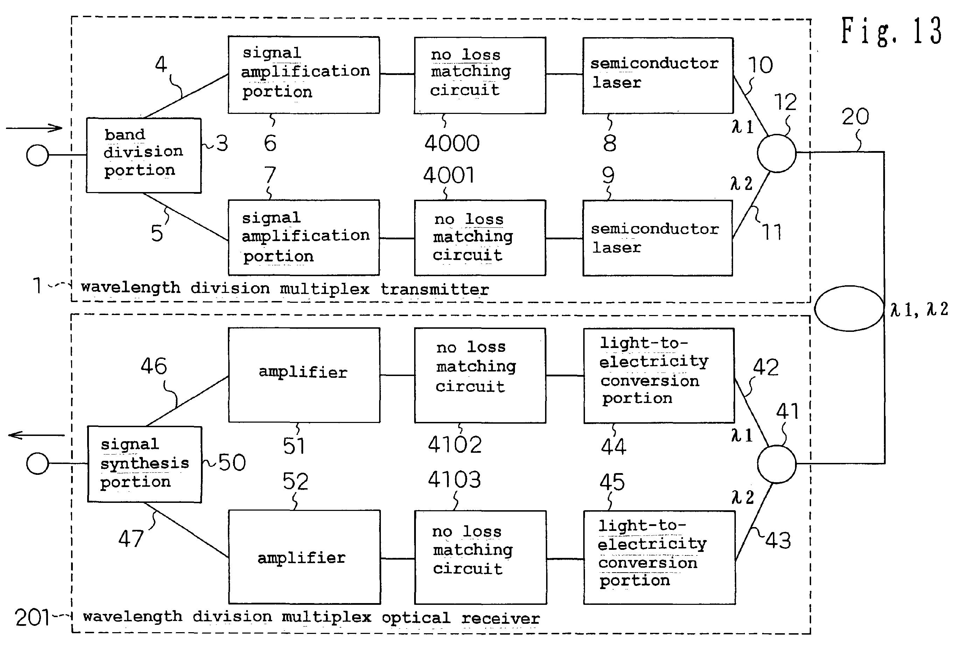

Furthermore, in the above embodiments, for example as shown in Figure 2, the wavelength division multiplex receiver according to the invention is described for the case where the amplifiers 51 and 52 are connected to the output sides of the light-to-electricity conversion portions 44 and 45. However, the wavelength division multiplex receiver according to the invention, not limited to this, may be configured such that no loss matching circuits 4102 and 4103 band-matched with the signal bands of electrical signals divided into bands may be inserted between the light-to-electricity conversion portions 44 and 45 and the amplifiers 51 and 52, as shown in Figure 13 as another example of the wavelength division multiplex optical receiver.

Further, as another example, it may be configured such that no loss matching circuit 4103 may be inserted at least on the high frequency band side. This allows electrical gain to be higher at least on the high frequency band side in the same manner as described above, and thus the load of the amplifier 52 can be reduced on the high frequency band side by that amount. Further, when no loss matching circuit 4102 is also inserted in the path of the low frequency band side, it becomes also possible to reduce the power consumption and parts count of the amplifier 51.

As apparent from the above description, the invention has the advantage that the quality of signals to be optically transmitted can be made better than conventional quality with a simple configuration.

## Claims

1. A wavelength division multiplex optical transmitter, comprising:
band division means of dividing an incoming frequency-multiplexed electrical signal into a plurality of frequency bands;
electricity-to-light conversion means of converting the electrical signals of said plurality of frequency bands into a plurality of optical signals using respective different wavelengths for each of the frequency bands; and
optical multiplex means of multiplexing each of said optical signals.

2. The wavelength division multiplex optical transmitter according to claim 1, wherein said dividing is performed such that a difference between the highest frequency and the lowest frequency in each frequency band of said plurality of frequency bands may be smaller than the difference between the highest frequency and the lowest frequency of said incoming frequency-multiplexed electrical signal.

3. The wavelength division multiplex optical transmitter according to claim 1, comprising FM modulation means of FM modulating at least one electrical signal of the electrical signals of said plurality of frequency bands into an FM signal and inputting the FM signal into said electricity-to-light conversion means.

4. The wavelength division multiplex optical transmitter according to claim 3, wherein an FM sub-carrier frequency of said FM signal is set such that signal-occupied bands will not overlap with each other.

5. The wavelength division multiplex optical transmitter according to claim 3, wherein the FM sub-carrier frequency of said FM signal is variable.

6. The wavelength division multiplex optical transmitter according to claim 1, comprising frequency conversion means of performing frequency conversion by shifting at least one frequency band of said plurality of frequency bands toward the high frequency side or toward the low frequency side and inputting the resultant frequency-converted signal into said electricity-to-light conversion means.

7. The wavelength division multiplex optical transmitter according to claim 6, comprising reference frequency signal generating means of generating a reference frequency signal to be utilized for said frequency conversion, said reference frequency signal being converted into optical signals of wavelengths different from any of said respective different wavelengths for each of the frequency bands, and multiplexed into said converted optical signals of different wavelengths from each other to be sent.

8. The wavelength division multiplex optical transmitter according to claim 1, wherein said dividing into a plurality of frequency bands is based on the properties of said electrical signal and/or said optical signal, and
the intensity of the electrical signals of said plurality of frequency bands and/or the optical modulation degrees of said converted optical signals of different wavelengths from each other are different based on the properties of said electrical signal and/or said optical signal.

9. A wavelength division multiplex optical receiver, comprising:
light-to-electricity conversion means of converting an optical signal from the wavelength division multiplex optical transmitter according to claim 1 into an electrical signal; and
filter means of respectively reconstructing the electrical signals of said plurality of frequency bands by dividing said converted electrical signal into said plurality of frequency bands.

10. A wavelength division multiplex optical receiver, comprising:
wavelength separation means of performing the wavelength separating of an optical signal from the wavelength division multiplex optical transmitter according to claim 1 into a plurality of optical signals which is converted using said respective different wavelengths for each of bands; and
light-to-electricity conversion means of respectively reconstructing the electrical signals of said plurality of frequency bands by converting the plurality of said wavelength-separated optical signals into electrical signals.

11. The wavelength division multiplex optical receiver according to claim 9 or 10, comprising signal synthesis means of synthesizing and multiplexing the respectively reconstructed electrical signals of said plurality of frequency bands.

12. The wavelength division multiplex optical receiver according to claim 9 or 10, comprising FM demodulation means of FM demodulating the electrical signals of said plurality of frequency bands which have been respectively reconstructed from said FM-modulated optical signal from the wavelength division multiplex optical transmitter according to claim 3.

13. The wavelength division multiplex optical receiver according to claim 9 or 10, comprising frequency conversion means of performing a shift in the direction opposite to said shifting in respectively reconstructing the electrical signals of said plurality of frequency bands from an optical signal from the wavelength division multiplex optical transmitter according to claim 6.

14. The wavelength division multiplex optical receiver according to claim 13, comprising light-to-electricity conversion means of performing light-to-electricity conversion of said transmitted reference frequency signal in order to perform said sift in the opposite direction in respectively reconstructing the electrical signals of said plurality of frequency bands from an optical signal from the wavelength division multiplex optical transmitter according to claim 7.

15. The wavelength division multiplex optical receiver according to claim 9 or 10, wherein the intensity of the electrical signals of said plurality of frequency bands and/or the optical modulation degrees of said converted optical signals of different wavelengths from each other are took into account in respectively reconstructing the electrical signals of said plurality of frequency bands from an optical signal from the wavelength division multiplex optical transmitter according to claim 8, the intensity of the electrical signals of said plurality of frequency bands and the optical modulation degrees of said converted optical signals of different wavelengths from each other being different based on the properties of said electrical signals and/or said optical signal.

16. An optical transmission system, comprising:
the wavelength division multiplex optical transmitter according to claim 1;
the wavelength division multiplex optical receiver according to claim 9 or 10; and
an optical transmission line of connecting said wavelength division multiplex optical transmitter and said wavelength division multiplex optical receiver and transmitting an optical signal.

17. An optical transmission system, comprising:
the wavelength division multiplex optical transmitter according to claim 3;
the wavelength division multiplex optical receiver according to claim 12; and
an optical transmission line of connecting said wavelength division multiplex optical transmitter and said wavelength division multiplex optical receiver and transmitting an optical signal , wherein FM signals can be transmitted.

18. An optical transmission device, comprising:
a wavelength division multiplex optical transmitter having,
(a-1) band division means of dividing a frequency-multiplexed electrical signal to be sent into a plurality of frequency bands,
(a-2) electricity-to-light conversion means of converting the electrical signals of said plurality of frequency bands into a plurality of optical signals using respective different wavelengths for each of the frequency bands, and
(a-3) optical multiplex means of multiplexing each of said optical signals and outputting the multiplexed optical signals to the outside; and
a wavelength division multiplex optical receiver having,
(b-1) light-to-electricity conversion means of converting an optical signal to be received from the outside into an electrical signal, and
(b-2) filter means of respectively reconstructing the electrical signals of said plurality of frequency bands by dividing said converted electrical signal into a plurality of predetermined frequency bands.

19. An optical transmission device, comprising:
a wavelength division multiplex optical transmitter having,
(a-1) band division means of dividing a frequency-multiplexed electrical signal to be sent into a plurality of frequency bands,
(a-2) electricity-to-light conversion means of converting the electrical signals of said plurality of frequency bands into a plurality of optical signals using respective different wavelengths for each of the frequency bands, and
(a-3) optical multiplex means of multiplexing each of said optical signals and outputting the multiplexed optical signals to the outside; and
a wavelength division multiplex optical receiver having,
(b-1) wavelength separation means of performing the wavelength separating of an optical signal to be received from the outside into a plurality of optical signals which is converted using respective different wavelengths for each of predetermined frequency bands, and
(b-2) light-to-electricity conversion means of respectively reconstructing the electrical signals of said plurality of frequency bands by converting the plurality of said wavelength-separated optical signals into electrical signals.

20. The optical transmission device according to claim 18 or 19, wherein said wavelength division multiplex optical transmitter has FM modulation means of FM modulating at least one electrical signal of the electrical signals of said plurality of frequency bands into an FM signal and inputting the FM signal into said electricity-to-light conversion means, and
said wavelength division multiplex optical receiver has FM demodulation means of FM demodulating the electrical signal of said plurality of frequency bands which have been respectively reconstructed from said FM-modulated optical signal from said wavelength division multiplex optical transmitter.

21. A optical transmission system, comprising:
a plurality of the optical transmission devices according to claim 18 or 19; and
an optical transmission line of connecting said plurality of the optical transmission devices to each other by a predetermined method and transmitting an optical signal.

22. The optical transmission system according to claim 21, comprising:
an output transmission line connected to said optical multiplex means of said wavelength division multiplex optical transmitter;
an input transmission line connected to said optical-signal-receiving side of said wavelength division multiplex optical receiver;
an optical transmission line for connecting a plurality of said optical transmission devices and transmitting an optical signal; and
an optical multiplex and demultiplex portion or circulator for connecting said output transmission line, said input transmission line, and said optical transmission line.

23. The wavelength division multiplex optical transmitter according to claim 1, comprising:
signal amplification means of amplifying the electrical signals of said plurality of frequency bands respectively for each of said frequency bands; and
no loss matching circuit means which is band-matched with the signal band of at least an electrical signal on the high frequency band side of said band-divided electrical signals, and which is provided between said signal amplification means on said high frequency band side and said electricity-to-light conversion means.

24. The wavelength division multiplex optical receiver according to claim 9, comprising:
no loss matching circuit means band-matched with the signal band of at least an electrical signal on the high frequency band side of the electrical signals of said plurality of frequency bands, which is output from said filter means; and
signal amplification means provided on the output side of said no loss matching circuit means.

25. The wavelength division multiplex optical receiver according to claim 10, comprising:
no loss matching circuit means band-matched with the signal band of at least an electrical signal on the high frequency band side of the electrical signals of said plurality of frequency bands, which is output from said light-to-electricity conversion means; and
signal amplification means provided on the output side of said no loss matching circuit means.

26. A method of transmitting wavelength division multiplex optical signal, comprising:
a band dividing step of dividing an incoming frequency-multiplexed electrical signal into a plurality of frequency bands;
an electricity-to-light converting step of converting the electrical signals of said plurality of frequency bands into a plurality of optical signals using respective different wavelengths for each of the frequency bands; and
an optical multiplexing step of multiplexing each of said optical signals.

27. A method of receiving wavelength division multiplex optical signal, comprising:
a light-to-electricity converting step of converting an optical signal by using the method of transmitting wavelength division multiplex optical signal according to claim 26 into an electrical signal; and
a filtering step of respectively reconstructing the electrical signals of said plurality of frequency bands by dividing said converted electrical signal into said plurality of frequency bands.

28. A method of receiving wavelength division multiplex optical signal, comprising:
a wavelength separating step performing the wavelength separating of an optical signal by using the method of transmitting wavelength division multiplex optical signal according to claim 26 into a plurality of optical signals which is converted using said respective different wavelengths for each of bands; and
a light-to-electricity converting step of respectively reconstructing the electrical signals of said plurality of frequency bands by converting the plurality of said wavelength-separated optical signals into electrical signals.
